# EUROPÄISCHE PATENTSCHRIFT

(11) **EP 2 948 358 B1**
(45) Veröffentlichungstag und Bekanntmachung des Hinweises auf die Patenterteilung: **27.05.2020**
(21) Anmeldenummer: 14701031.8
(22) Anmeldetag: 20.01.2014
(51) Int. Cl.: B61D 43/00, B61C 15/12, G01P 15/105, G01B 7/00, B60L 3/00, G01P 3/49, G01P 15/00

(54) **ERKENNUNG VON DREHBESCHLEUNIGUNGEN AN RADSÄTZEN EINES SCHIENENFAHRZEUGS**
DETECTION OF ANGULAR ACCELERATIONS ON WHEELSETS OF A RAIL VEHICLE
DÉTECTION DES ACCÉLÉRATIONS DE ROTATION SUR DES ESSIEUX MONTÉS D'UN VÉHICULE FERROVIAIRE

(30) Priorität: 22.01.2013 DE 102013200979
(43) Veröffentlichungstag der Anmeldung: 02.12.2015
(73) Patentinhaber: Bombardier Transportation GmbH, 10785 Berlin (DE)
(72) Erfinder: WULF, Eckard, 14612 Falkensee (DE); WEINHARDT, Michael, 68309 Mannheim (DE)
(74) Vertreter: Patentanwälte Bressel und Partner mbB
(86) Internationale Anmeldenummer: PCT/EP2014/051026
(87) Internationale Veröffentlichungsnummer: WO 2014/114592

(56) Entgegenhaltungen:
- EP-A1- 0 518 456
- WO-A1-02/095422
- DE-A1- 2 551 009
- DE-A1- 19 748 392
- DE-A1-102011 011 443

## Beschreibung

Die Erfindung betrifft ein Verfahren zum Erkennen von Drehbeschleunigungen an Radsätzen eines Schienenfahrzeugs. Die Erfindung betrifft ferner eine Anordnung zum Erkennen solcher Drehbeschleunigungen.

In den Antriebssträngen von Schienenfahrzeugen kann es zu unbeabsichtigten und unerwünschten Drehbeschleunigungen kommen. Insbesondere können bei Bremsvorgängen und Beschleunigungsvorgängen des Fahrzeugs Reibwertschwankungen zwischen Rad und Schiene auftreten. Ohne geeignete Gegenmaßnahmen führt dies beim Bremsvorgang bis zum Stillstand des Rades und beim Beschleunigungsvorgang zum Durchrutschen des Rades, d.h. zu hohen Rad-Drehzahlen bei geringer Antriebswirkung. Diese Vorgänge werden auch als Schleuder- oder Gleitvorgängen bezeichnet. Sie können außerdem zur Anregung von Drehschwingungen führen. Wenn die Anregung insbesondere wiederholt oder dauerhaft entsprechend den Resonanzfrequenzen des Antriebsstrangs auftritt, können Bauteile aufgrund hoher Schwingungsamplituden geschädigt werden. Problematisch sind insbesondere Drehschwingungen, bei denen die Radscheiben eines Radsatzes gegenphasig schwingen. Solche Drehschwingungen werden auch als Rollieren bezeichnet. Diese Erscheinung kann insbesondere bei hohen Antriebskräften oder hohen Bremskräften in Kombination mit großen Reibwerten zwischen den Rädern und den Fahrschienen auftreten, wenn der Reibwert örtlich verschieden ist.

Aus DE 31 35 613 A1 ist ein Verfahren zum Anpassen der Zugkraft eines Drehstrom-Schienentriebfahrzeuges an die Rad-Schiene-Haftwertgrenze bekannt. In dem Drehstrom-Schienentriebfahrzeug, das durch Asynchronmotoren angetrieben wird, erfasst ein Impulsgeber den Zustand eines Makro-Schlupfes zwischen den Treibrädern und den Schienen, der auftritt, wenn die Zugkraft oberhalb der Haftwertgrenze liegt. Bei einem Makro-Schlupf treten Drehschwingungen der einen Radscheibe gegen die andere auf. Der Impulsgeber erzeugt einen Steuerimpuls, der ein Kommando für automatisches Sanden auslöst und zeitlich unmittelbar davor eine Verminderung der am Asynchronmotor anliegenden elektrischen Spannung. Als Impulsgeber für die Auslösung dieses Schleuderschutzes dient z.B. ein Beschleunigungsmesser, der an der Treibachse angeordnet ist. Eine andere Möglichkeit nutzt die Detektion einer Schwingungsform von Radscheibe gegen Radscheibe an der verbindenden Elastizität der Achse, die von einem Schwingungsdetektor erfasst wird und somit den Steuerimpuls liefert. Durch die bei ausgelöstem Steuerimpuls auftretende Verminderung der am Asynchronmotor anliegenden elektrischen Spannung wird die Drehmomentkennlinie des Motors derart geändert, dass sie anstelle des normalen steilen Verlaufes einen flacheren Verlauf annimmt. Nachteilig an der durch einen Steuerimpuls ausgelösten zeitlich begrenzten Verminderung der elektrischen Spannung ist die Reduzierung der Fahrmotorleistung.

DE 44 35 775 A1 beschreibt ein Verfahren zur Kraftschlussregelung mit Torsionsschwingungsunterdrückung im Antriebsstrang für Triebfahrzeuge mit stromrichtergespeisten Fahrmotoren, die genügend kurze Luftspaltdrehmoment-Anregelzeit aufweisen, unter ausschließlicher Messung von Ständerströmen und - spannungen sowie der Fahrmotordrehzahl mit Vorgabe der Sollzugkraft. Ein Technologieregler mit Schätzeinrichtung für die mechanischen Größen des Antriebsstranges gibt einen Sollwert für das Luftspaltmoment so vor, dass einerseits die Dämpfung des Antriebssystems aktiv vergrößert und andererseits das mittlere Luftspaltmoment eine Größe hat, die das Fahren auf dem gewünschten Arbeitspunkt der Kraftschlusskennlinie ermöglicht. Im Vergleich zur konventionellen Drehzahlregelung werden keine zusätzlichen Messsensoren benötigt. Eingangsgrößen für die Schätzeinrichtung sind der berechnete Wert des Luftspaltmoments sowie die gemessene Drehzahl des Fahrmotors.

Derartige Lösungen sind auf die Auswertung von Impulsgebersignalen angewiesen. Der Impulsgeber, der typischerweise am Fahrmotor angeordnet ist, gibt jeweils bei Drehung der Welle um einen bestimmten Drehwinkel einen Impuls ab. Zur Bestimmung der Geschwindigkeit der Drehung wird die Zeit zwischen zwei bzw. mehreren Impulsen gemessen. Nachteilig dabei ist die Kürze der Zeit zwischen zwei aufeinander folgenden Impulsen, die bei hohen Drehzahlen und somit bei hohen Fahrgeschwindigkeiten auftritt. Ferner hängt diese Zeit zwischen zwei Impulsen auch von Fertigungstoleranzen der Impulsgeber ab, die zu einer ungleichmäßigen, mit unterschiedlichen Zeitdifferenzen versehenen Impulsfolge selbst bei konstanter Drehgeschwindigkeit führen. Um die Auswirkungen dieser Nachteile zu reduzieren, kann über die Folge von mehreren Impulsen gemittelt werden. Dies führt jedoch zu einer Verlängerung der Reaktionszeit der Einrichtungen, die auf die Impulse oder deren zeitliche Folge als Eingangsgröße angewiesen sind. Hohe Änderungen der Drehzahl, wie sie beim Schleudern oder Gleiten der Räder auf der Schiene auftreten können, werden prinzipbedingt verspätet erkannt. Um die Änderung der Drehzahl feststellen zu können, müssen entweder die Zeitintervalle zwischen den Impulsen miteinander verglichen werden oder die unter Nutzung der Zeitintervalle ermittelte Geschwindigkeit nach der Zeit abgeleitet werden, um die Beschleunigung zu ermitteln.

Hinzu kommt, dass für eine präzise Bestimmung der Drehzahl aus den Impulsen von Impulsgebern ausreichend viele Impulse pro Umdrehung abgegeben werden müssen. Die Mindestanzahl ist umso größer, je höher die zu messende Frequenz der Drehschwingung ist und umso geringer die Drehzahl ist, bei der die Messung der Schwingung noch stattfinden soll. Zur Vermeidung einer unerwünschten Drehbeschleunigung reichen die Impulse in vielen Fällen nicht aus. Wenn die Drehbeschleunigung erkannt wurde, ist die Drehbewegung des Rades beim Bremsvorgang des Fahrzeugs bereits zum Stillstand gekommen oder das Rad rutscht beim Beschleunigungsvorgang des Fahrzeugs bereits durch.

Die Auswertung der Signale von Impulsgebern am Fahrmotor hat ferner den Nachteil, dass sich Drehschwingungen des Radsatzes, die insbesondere beim Rollieren auftreten, erst über den Antriebsstrang zu dem Ort des Impulsgebers am Fahrmotor übertragen müssen, bevor sie anhand der Signale des Impulsgebers erkannt werden können. Insbesondere können so genannte Schwingungsknoten auftreten, bei denen sich gegenläufige Schwingungen an einzelnen Orten hinsichtlich ihrer Schwingungsamplituden kompensieren, an anderen Orten jedoch nicht. Ist der Impulsgeber an einem Schwingungsknoten oder in der Nähe eines Schwingungsknotens angeordnet, werden die Schwingungen nicht erkannt.

EP 0 518 456 A1 beschreibt ein Verfahren zum Erzeugen elektrischer Energie mittels Generator sowie die Verwendung in Fahrzeugen mit Gleitschutzsystemen. Gemäß dem Verfahren wird die elektrische Energie aus Drehbewegung der Achsen von insbesondere schienengebundenen Fahrzeugen mittels einer Generatoranordnung erzeugt. Es wird außerdem die Drehzahl der jeweiligen Achse ermittelt, wobei auf einen separaten Drehwinkelgeber verzichtet wird. Die erzeugte Spannung des Generators wird einer Elektronikeinheit zugeführt, welche an einem Ausgang ein digitales Pulsbreitensignal liefert, aus welchem die Geschwindigkeit der entsprechenden Achse ermittelt wird. Bei der Verwendung in einem Antriebsschlupfregelungssystem wird zunächst die Drehzahl - proportionale Pulsbreite der erzeugten elektrischen Spannung gemessen und daraus die Geschwindigkeit ermittelt. Darauf folgt eine Berechnung der Verzögerung bzw. der Beschleunigung der angetriebenen Radsätze.

WO 02/095422 A1 beschreibt einen Ferraris-Sensor zur Beschleunigungsmessung mit einem Abtastkopf, der aus abwechselnd in einer Beschleunigungsrichtung angeordneten Magneten und Detektorspulen besteht. Magnetfelder und Detektorspulen sind senkrecht zur Oberfläche eines Wirbelstromkörpers angeordnet. Gemäß einer konkreten Ausgestaltung sind die Magnete und Detektorspulen auf einer ferromagnetischen Trägerstruktur angeordnet und ist eine ferromagnetische Gegenstruktur auf der dem Abtastkopf gegenüberliegenden Seite des Wirbelstromkörpers angeordnet. Der Ferraris-Sensor dient der Detektion von Geschwindigkeit oder Beschleunigung einer geradlinigen Bewegung des Wirbelstromkörpers.

Es ist eine Aufgabe der vorliegenden Erfindung, ein Verfahren und eine Anordnung zum Erkennen von Drehbeschleunigungen an Radsätzen eines Schienenfahrzeugs anzugeben, wobei die Drehbeschleunigungen möglichst ohne Zeitverzögerung erkannt werden können. Vorzugsweise soll außerdem der Effekt von Schwingungsknoten vermieden werden.

Die Erfindung geht von dem Grundgedanken aus, dass mit einem so genannten Ferraris-Sensor Drehbeschleunigungen ohne Zeitverzögerung für die Aufbereitung der Sensorsignale erkannt werden können. Unter einem Ferraris-Sensor wird ein Sensor verstanden, der ein mit dem Objekt, dessen Drehbewegung erfasst werden soll, mitdrehendes Teil aufweist. Außerdem weist der Sensor eine Einrichtung zur Erzeugung eines Magnetfeldes (d.h. zumindest einen Permanentmagneten und/oder Elektromagneten) auf, die so angeordnet ist, dass in dem mitdrehenden Teil des Sensors elektrische Ströme induziert werden, insbesondere Wirbelströme. Das mitdrehende Teil ist daher elektrisch leitend oder weist zumindest einen elektrisch leitenden Bereich auf, in dem die elektrischen Ströme induziert werden. Dabei tritt die magnetische Induktion elektrischer Ströme deshalb auf, weil das Teil dreht und sich daher relativ zu dem Magnetfeld bewegt. Aus Sicht des drehenden Teils ändert sich das Magnetfeld, was zu der Induktion von Strömen führt.

Das drehende Teil des Sensors ist nicht ferromagnetisch. Insbesondere sind paramagnetische, elektrisch leitende Materialien geeignet, zum Beispiel Aluminium. Es können jedoch auch andere, nicht ferromagnetische Materialien verwendet werden. Auch die Verwendung von diamagnetischen Materialien ist möglich.

Ferner weist der Sensor ein nicht drehendes Teil auf, in dem ein zusätzliches Magnetfeld, das die in dem drehenden Teil induzierten elektrischen Ströme erzeugen, eine elektrische Spannung induziert. Diese induzierte elektrische Spannung oder die daraus resultierenden elektrischen Ströme dienen als primäre Messgröße für die Bestimmung der Drehbeschleunigungs-Messwerte. Ein Winkelmesssystem mit integriertem Ferraris-Sensor wird z.B. in der DE 101 23 188 A1 beschrieben. Generell wird darin in Bezug auf Ferraris-Sensoren erwähnt, dass solche Sensoren die Größe oder die Änderung von Wirbelströmen, die durch relative Bewegung von Magnetfeldern und Wirbelstromkörpern entstehen, erfassen. Die Ursache für die von dem Sensor erfasste Messgröße ist daher die Bewegung des Wirbelstromkörpers, im Fall der vorliegenden Erfindung des drehbaren Teils des Sensors.

Es kann daher unmittelbar die Geschwindigkeit oder Beschleunigung der Drehbewegung gemessen werden. Eine Integration der Messgröße über die Zeit, wie es bei der Auswertung von Impulssignalen von Impulsgebern der Fall ist, muss bei Ferraris-Sensoren nicht vorgenommen werden. Daher eignet sich insbesondere ein die Änderung von Wirbelströmen messender Ferraris-Sensor, der somit unmittelbar die Drehbeschleunigung misst, besonders gut für die Erfassung und Erkennung von Drehbeschleunigungen und Drehschwingungen. Da die Integration über die Zeit nicht erforderlich ist, tritt prinzipbedingt keine Zeitverzögerung bei der Erfassung von Drehbeschleunigungen auf.

Insbesondere wird es daher bevorzugt, dass das das Magnetfeld, welches elektrische Ströme in dem drehenden Teil des Sensors induziert, räumlich homogen auf das drehende Teil wirkt. Durch eine Drehung des drehenden Teils bei konstanter Drehgeschwindigkeit werden daher keine elektrischen Ströme in dem drehenden Teil induziert. Bei einer Änderung der Drehgeschwindigkeit (das heißt bei einer Beschleunigung/Verzögerung der Drehbewegung) dagegen werden solche Ströme induziert. Daher wird unmittelbar die Beschleunigung/Verzögerung gemessen.

Außerdem liefern Ferraris-Sensoren, die unmittelbar die Beschleunigung messen, Messwerte unabhängig von der Drehzahl. Anders als bei Impulsgebern muss nicht auf eine Mindestanzahl von Impulsen pro Umdrehung geachtet werden. Lediglich bei einer Digitalisierung der eigentlichen Messgröße (der in dem nicht drehenden Teil induzierten Spannung) muss auf eine für die Frequenz geeignete Abtastrate geachtet werden. Dies kann aber insbesondere unabhängig von der Funktion des eigentlichen Ferraris-Sensors eingestellt werden, da es lediglich die Digitalisierung betrifft. Dagegen müssen Impulsgeber von vornherein so ausgelegt sein, dass sie eine ausreichende Anzahl von Impulsen pro Umdrehung erzeugen.

Hinzu kommt, dass Ferraris-Sensoren sehr robust gebaut werden können und auf einfache Weise (z.B. durch die Integration in ein Gehäuse) vor äußerer Verschmutzung geschützt werden können. Der Effekt der magnetischen Induktion ist darüber hinaus ein verschleißfreier Prozess, der nicht zu der Abnutzung von Teilen des Sensors führt. Insbesondere wird das nicht drehende Teil des Sensors, in dem von dem zusätzlichen Magnetfeld des drehenden Teils eine elektrische Spannung induziert wird, wie erwähnt nicht mitbewegt und ist daher nicht selbst Erschütterungen infolge von Drehschwingungen ausgesetzt. Diesen mechanischen Belastungen ist lediglich das drehbare Teil ausgesetzt, welcher sehr robust ausgestaltet werden kann, da er selbst keine sensible Sensorik aufweist. Drehlager für die Lagerung der Drehbewegung des mitdrehenden Teils können je nach Einsatzzweck des Sensors entsprechend robust und dauerhaft funktionsfähig ausgestaltet werden.

Insbesondere wird vorgeschlagen: Ein Verfahren zum Erkennen von Drehbeschleunigungen an Radsätzen eines Schienenfahrzeugs nach Anspruch 1.

Außerdem wird vorgeschlagen: Eine Anordnung zum Erkennen von Drehbeschleunigungen an Radsätzen eines Schienenfahrzeugs nach Anspruch 5. Insbesondere wird eine unbeabsichtigte Drehbeschleunigung erkannt, das heißt eine Drehbeschleunigung, die zu einem Schlupf zwischen Rad und Schiene führt.

Insbesondere weist die Anordnung außerdem den Radsatz und/oder den Antriebsstrang des Schienenfahrzeugs auf, mit dem der Sensor gekoppelt ist. Auch gehört zum Umfang der Erfindung ein Schienenfahrzeug mit der Anordnung, wobei der Drehbewegungs-Sensor mit dem Radsatz und/oder dem Antriebsstrang gekoppelt ist, um die Drehbewegung zu messen. Optional ist die Auswertungseinrichtung über eine Signalverbindung mit einer Steuereinrichtung zum Steuern des Betriebes zumindest eines Traktion-Motors des Schienenfahrzeugs abhängig von Messwerten des Drehbewegungs-Sensors verbunden.

Die Auswertungseinrichtung weist insbesondere eine Abtasteinrichtung zur Abtastung der in dem nicht drehenden Teil des Sensors induzierten Spannung zum Zweck der Erzeugung digitaler Signale auf, d.h. einen Analog-/Digital-Wandler.

Alternativ oder zusätzlich weist die Auswertungseinrichtung vorzugsweise eine Vergleichseinrichtung auf, die die gemessene Beschleunigung des Radsatzes und/oder des Antriebsstranges mit zumindest einem vorgegebenen Grenzwert der Beschleunigung und/oder einer Ausgangsgröße eines Rechenmodells vergleicht. Das Rechenmodell kann insbesondere ein physikalisches Modell des Antriebsstranges, des Radsatzes und/oder eines Teils des Antriebsstranges oder des Radsatzes sein. Alternativ oder zusätzlich zu einer Vergleichseinrichtung kann die Auswertungseinrichtung ausgestaltet sein, die gemessene Beschleunigung als Eingangsgröße für ein Rechenmodell, insbesondere das genannte Rechenmodell, zu verwenden. Unabhängig davon, ob eine Vergleichseinrichtung und/oder ein Rechenmodell vorhanden ist bzw. verwendet wird, wird es bevorzugt, dass die Auswertungseinrichtung die gemessene Beschleunigung dazu verwendet, unbeabsichtigte Drehbeschleunigungen (das heißt insbesondere solche Drehbeschleunigungen, die zu einem Schlupf zwischen Rad und Schiene führen) des Radsatzes zu reduzieren oder zu vermeiden. Insbesondere wird die gemessene Beschleunigung dazu verwendet, Drehschwingungen des Radsatzes und/oder des Antriebsstranges aktiv zu dämpfen. Der Begriff "aktiv" bedeutet dabei, dass in den Betrieb des Radsatzes und/oder Antriebsstranges eingegriffen wird, insbesondere über die Steuerung des zumindest einen Traktionsmotors, der den Radsatz über den Antriebsstrang antreibt. Bezüglich der Steuerung zur aktiven Bedämpfung kann eine Ausführungsform der vorliegenden Erfindung ähnlich wie der aktive Antriebsstrangbedämpfungsregler ausgestaltet sein, der in DE 44 35 775 A1 detailliert beschrieben ist.

Es sind jedoch auch andere Ausgestaltungen der Antriebssteuerung und der Erzeugung zumindest einer Eingangsgröße der Antriebssteuerung möglich, wobei die zumindest eine Eingangsgröße vorzugsweise abhängig von den Messwerten der Beschleunigung des Radsatzes und/oder des Antriebsstranges berechnet wird, und zwar wiederholt oder kontinuierlich. In jedem Fall wird es bevorzugt, dass abhängig von den Messwerten des Drehbewegungs-Sensors (insbesondere von der Auswertungseinrichtung) Signale erzeugt werden, die als Eingangssignale der Antriebssteuerung zugeführt werden. Die Antriebssteuerung steuert abhängig von diesen Eingangssignalen zumindest einen Traktions-Wechselrichter oder anderen Stromrichter so, dass der zumindest eine Traktions-Motor unbeabsichtigte Drehbeschleunigungen und insbesondere Drehschwingungen des Radsatzes und/oder des Antriebstranges aktiv verringert bzw. dämpft, weil der von dem Traktions-Wechselrichtung/Stromrichter erzeugte, dem Traktionsmotor oder den Traktionsmotoren zugeführte Wechselstrom, mit dem der zumindest eine Traktions-Motor betrieben wird, entsprechend gestaltet ist. Dieses Prinzip ist für eine konkrete Ausführung bereits aus DE 44 35 775 A1 bekannt. Jedoch wird anders als bei dieser Druckschrift kein Drehzahlgeber, sondern ein Ferraris-Sensor verwendet. Auch kann die Ausgestaltung, die in der DE 44 35 775 A1 beschrieben ist, auch bezüglich anderer Funktionen und Ausgestaltungsmerkmale anders ausgeführt werden. Z.B. muss nicht zwingend eine Berechnung des Luftspaltmoments stattfinden.

Vorzugsweise misst der Sensor unmittelbar die Drehbeschleunigung des drehenden Teils des Sensors. Auf Details und Merkmale dieser Ausführungsform wurde bereits eingegangen.

Es wird bevorzugt, dass der Sensor am Radsatz angeordnet ist. Dabei ist insbesondere das drehende Teil des Sensors mit einem Rad des Radsatzes oder der Radsatzwelle verbunden, sodass der drehende Teil mit dem Radsatz dreht. Ferner sind insbesondere der nicht drehende Teil und die Magnetfeld-Erzeugungseinrichtung mit nicht mit dem Radsatz drehenden Bauteilen des Schienenfahrzeugs verbunden, die insbesondere nicht gegenüber dem Radsatz abgefedert sind. Insbesondere können die Magnetfeld-Erzeugungseinrichtung und der nicht drehende Teil des Sensors mit einem Gehäuse eines Radsatzlagers verbunden sein.

Es wird daher bevorzugt, dass die Magnetfeld-Erzeugungseinrichtung und das nicht drehende Teil des Sensors mit einem Gehäuse eines Radsatz-Drehlagers verbunden sind, das den Radsatz während seiner Drehbewegung lagert. Bei dem Radsatz-Drehlager kann es sich zum Beispiel um ein Wälzlager handeln.

Die Anbringung des Sensors unmittelbar an dem Radsatz hat den Vorteil, dass der Sensor nicht an einem Schwingungsknoten des Antriebsstranges angeordnet ist und daher zuverlässig Drehschwingungen am Radsatz misst. Auch unbeabsichtigte Drehschwingungen des Radsatzes werden ohne Verfälschung durch andere Bauteile des Antriebsstrangs gemessen.

Ferner wird bevorzugt, dass das drehende Teil des Drehbewegungs-Sensors aus Sicht des einen Rades eines Radsatzes, der zwei Räder und eine Radsatzwelle aufweist, auf der gegenüberliegenden Seite des anderen Rades mit dem anderen Rad oder der Radsatzwelle verbunden ist. Diese außenseitige Anordnung des drehbaren Teils des Sensors hat den Vorteil, dass der Sensor unmittelbar die Drehbeschleunigung eines Rades misst und nicht lediglich über ein längeres Stück der Radsatzwelle mit dem Rad gekoppelt ist. Selbstverständlich ist es auch möglich, zwei der Drehbewegungs-Sensoren zu verwenden und z. B. jeweils außenseitig eines der Räder am Radsatz bzw. am Rad anzuordnen und damit jeweils das drehbare Teil anzukoppeln. Ferner ist es möglich, von einer Mehrzahl der Drehbewegungs-Sensoren einen am Antriebsstrang des Schienenfahrzeugs, nicht aber am Radsatz anzuordnen. Z.B. kann der Sensor mit seinem drehbaren Teil an eine Antriebs-Welle oder ein Zahnrad angekoppelt werden.

Alternativ zu der Anbringung des Sensors unmittelbar an dem Radsatz ist es aber auch möglich, den Sensor am oder im Antriebsstrang anzuordnen. Möglich ist daher eine Anordnung, wobei das drehende Teil des Sensors mit einer Fahrmotorwelle eines Fahrmotors und das nicht drehende Teil mit einem Gehäuse des Fahrmotors verbunden ist. Auch möglich ist eine Anordnung, bei der das drehende Teil des Sensors mit einer Getriebewelle eines Getriebes im Antriebsstrang des Schienenfahrzeugs und das nicht drehende Teil mit einem Gehäuse des Getriebes verbunden ist.

Insbesondere werden die Messwerte des Drehbewegungs-Sensors zum Zweck der Erkennung und optional auch der Vermeidung (insbesondere aktive Vermeidung durch Eingriffe in den Betrieb) von Rollieren (gegenphasiges Schwingen der Radscheiben eines Radsatzes) von Schleudervorgängen (große Beschleunigung der Drehbewegung während einer Haftwertreduzierung zwischen Rad und Schiene) und/oder von Gleitvorgängen (große Verzögerung der Drehbewegung bei Bremsvorgängen des Fahrzeugs durch Haftwertreduzierung zwischen Rad und Schiene) genutzt. Insbesondere kann bei Erkennung eines solchen Vorgangs eine dem Vorgang entsprechende Gegenmaßnahme ergriffen werden.

Insbesondere kann das von dem Drehbewegungs-Sensor gelieferte Drehbeschleunigungssignal (unter Beschleunigung wird auch eine negative Beschleunigung, d.h. eine Verzögerung, verstanden) als Ausgangssignal zur aktiven Gegensteuerung bei Rolliervorgängen und anderen Resonanzschwingungen im Antriebsstrang einschließlich Radsatz verwendet. Insbesondere können dabei schnelle Regelungsprozesse und/oder Steuerungsprozesse zum Betrieb zumindest eines Traktions-Stromrichters des Schienenfahrzeugs zur Anwendung kommen. Insbesondere kann der Antrieb jedes angetriebenen Radsatzes einzeln, separat von anderen Radsätzen gesteuert und/oder geregelt werden. Daher kann insbesondere jeder Radsatz und/oder der damit verbundene Antriebsstrang mit einem erfindungsgemäßen Drehbewegungs-Sensor ausgestattet werden/sein. Dies schließt nicht aus, dass auch ein nicht angetriebener Radsatz mit zumindest einem Drehbewegungs-Sensor ausgestattet wird.

Die Vermeidung von schädlichen und bauteilbelastenden Rollier- oder Resonanzschwingungsvorgängen schont die Bauteile insbesondere an der Verbindung zwischen Rad (d.h. Radscheibe) und Radsatzwelle und führt zu einer Verbesserung der Ausnutzung der maximal übertragbaren Kräfte zwischen Rad und Schiene.

Wenn derselbe Radsatz mit zumindest zwei Ferraris-Sensoren ausgestattet wird, wobei jeder der Sensoren so angeordnet wird (z.B. außenseitig, wie oben beschrieben), dass beide Räder des Radsatzes einem der Sensoren zugeordnet sind, kann das Rollieren unmittelbar gemessen werden. Auch dies ist ein Vorteil der vorliegenden Erfindung. Insbesondere kann der Ferraris-Sensor so ausgestaltet sein, dass das drehende Teil eine vorzugsweise rotationssymmetrische Aluminiumscheibe aufweist, die durch ein magnetisches Feld von zumindest einem Permanentmagneten rotiert, während sich das drehende Teil dreht. Das magnetische Feld erzeugt die erwähnten Wirbelströme in der Aluminiumscheibe. Diese Wirbelströme wiederum erzeugen per magnetischer Induktion eine elektrische Spannung in einer Messspule des Sensors. Die Spannung in der Messspule ist insbesondere proportional zu der Drehbeschleunigung der Aluminiumscheibe. Entsprechende Sensoren sind z.B. von Baumer Hübner GmbH, Max-Dohrn-Straße 2+4, D-10589 Berlin, Deutschland erhältlich, z.B. Ferraris-Sensor ACC 70 mit integriertem Signalverstärker.

Ausführungsbeispiele der Erfindung werden nun unter Bezugnahme auf die beigefügte Zeichnung beschrieben. Die einzelnen Figuren der Zeichnung zeigen:
- Fig. 1: schematisch einen Radsatz eines Schienenfahrzeugs mit einem Traktionsmotor, der über ein Getriebe die Radsatzwelle antreiben kann,
- Fig. 2: schematisch einen Antriebsstrang für ein Schienenfahrzeug mit einem Traktionsmotor, einem Getriebe und einem angetriebenen Radsatz, wobei mit dem Radsatz ein Ferraris-Sensor gekoppelt ist, der Messsignale der Drehbewegung zu einer Auswertungseinrichtung überträgt, welche wiederum Signale zu einer Steuerung und/oder Regelung eines Traktionsumrichters des Traktions-Motors überträgt,
- Fig. 3: schematisch einen Längsschnitt durch eine Anordnung mit einem Ende einer Radsatzwelle, die innerhalb eines Radsatz-Lagergehäuses drehgelagert ist, wobei ein Ferraris-Sensor über eine Kupplung an das Ende der Radsatzwelle angekoppelt ist, und
- Fig. 4: schematisch einen Ferraris-Sensor, insbesondere den in Fig. 3 dargestellten Sensor, wobei in einem Längsschnitt-Darstellung Teile des Sensors gezeigt sind.

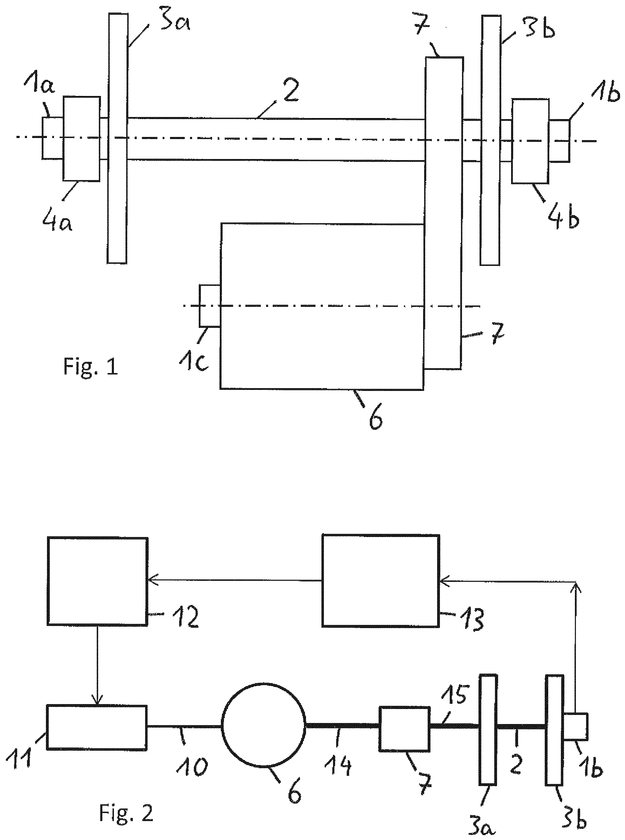

Fig. 1 zeigt einen Radsatz mit einer Radsatzwelle 2 und zwei Rädern bzw. Radscheiben 3a, 3b. Die Radsatzwelle ist in der Nähe ihrer entgegengesetzten Enden, außenseitig der Räder 3a, 3b unter Verwendung von Radsatz-Drehlagern 4a, 4b drehbar gelagert. Die Drehachse des Radsatzes ist durch eine strichpunktierte Linie dargestellt.

Ein Traktionsmotor 6 ist dazu in der Lage, über ein Getriebe 7 die Radsatzwelle 2 anzutreiben. Die Drehachse des Läufers des Traktionsmotors 6 ist ebenfalls durch eine strichpunktierte Linie dargestellt.

Insbesondere an drei verschiedenen Positionen der Anordnung kann ein Ferraris-Sensor angeordnet sein, um die Drehbewegung des Antriebsstrangs, einschließlich des Radsatzes, zu messen. Entsprechend den drei Positionen sind in Fig. 1 drei Ferraris-Sensoren 1a, 1b, 1c dargestellt. In der Praxis kann jedoch lediglich einer der Sensoren 1 oder können lediglich zwei der Sensoren 1 bei konkreten Ausführungsformen der Anordnung vorhanden sein. Darüber hinaus gibt es noch weitere mögliche Positionen für die Ankopplung eines Ferraris-Sensors an den Antriebsstrang eines Schienenfahrzeugs. Bei der schematisch in Fig. 1 dargestellten Anordnung könnte z.B. ein Ferraris-Sensor am Getriebe 7 angeordnet werden, sodass das drehende Teil des Sensors um die Läufer-Drehachse des Traktionsmotors 6 und des Eingangsbereichs des Getriebes 7 dreht. Es sind jedoch auch andere Konfigurationen von Antriebssträngen für Schienenfahrzeuge bekannt und möglich. Z.B. kann die Läufer-Drehachse des Traktionsmotors quer zur Drehachse des Radsatzes verlaufen. Insbesondere je nach Ausgestaltung des Getriebes eröffnet dies weitere mögliche Positionen für den Sensor.

Die in Fig. 1 dargestellten Radsatz-Drehlager 4 stützen üblicherweise federnd den Drehgestell-Rahmen des Schienenfahrzeugs und tragen somit den Drehgestell-Rahmen. Weitere Teile der gezeigten Anordnung können am Drehgestell-Rahmen abgestützt sein, insbesondere der Traktionsmotor 6 und das Getriebe 7. Ferner kann der Antriebsstrang noch weitere, nicht näher dargestellte Teile aufweisen, z.B. eine Bogenzahnkupplung zwischen Traktionsmotor und Getriebe.

Die signaltechnische Ankopplung der Ferraris-Sensoren 1 in Fig. 1 ist nicht dargestellt. Sie ist jedoch schematisch in der Anordnung von Fig. 2 dargestellt, bei der es sich um die gleiche Anordnung wie in Fig. 1 handeln kann, oder auch um eine andere Anordnung eines Antriebsstrangs für ein Schienenfahrzeug handeln kann.

Der Traktionsmotor 6 treibt über einen ersten Abschnitt 14 des Antriebsstrangs ein Getriebe 7 an, das wiederum über einen zweiten Abschnitt 15 des Antriebsstrangs einen Radsatz mit Radsatzwelle 2 und Rädern 3a, 3b antreibt. Ein Ferraris-Sensor 1b ist außenseitig des Rades 3b mit dem Rad oder der Radsatzwelle gekoppelt.

Über eine Signalverbindung, die durch zwei Pfeile dargestellt ist, ist ein Signalausgang des Sensors 1b mit dem Signaleingang einer Auswertungseinrichtung 13 verbunden. Ein Signalausgang der Auswertungseinrichtung 13 ist wiederum mit einem Signaleingang einer Steuerung und/oder Regelung 12 verbunden, die den Betrieb eines Traktions-Stromrichters 11 steuert und/oder regelt. Der Traktions-Stromrichter 11 ist über eine insbesondere dreiphasige elektrische Leitung 10 mit dem Traktionsmotor 6 verbunden. Der Traktions-Stromrichter 11 erzeugt den Wechselstrom, mit dem der Traktionsmotor 6 betrieben wird. Durch Steuerung/Regelung des Traktions-Stromrichters 11 kann daher indirekt der Traktionsmotor 6 gesteuert werden.

Insbesondere werden die von dem Sensor 1b erzeugten Messsignale, vorzugsweise Drehbeschleunigungssignale, zu der Auswertungseinrichtung 13 übertragen. Die Kombination aus Auswertungseinrichtung 13 und Steuer-/Regeleinrichtung 12 ist so ausgestaltet, dass unbeabsichtigte Drehbeschleunigungen am Ort des Sensors 1b und insbesondere Drehschwingungen am Ort des Sensors 1b, die einer unerwünschten Belastung des Radsatzes entsprechen, erkannt und/oder für eine aktive Gegensteuerung verwendet werden. Hierzu steuert die Steuer-/Regeleinrichtung 12 den Traktions-Stromrichter 11 so an, dass der Wechselstrom des Traktionsmotors 6 diesen veranlasst, der Drehbeschleunigung und insbesondere den Drehschwingungen entgegenzuwirken.

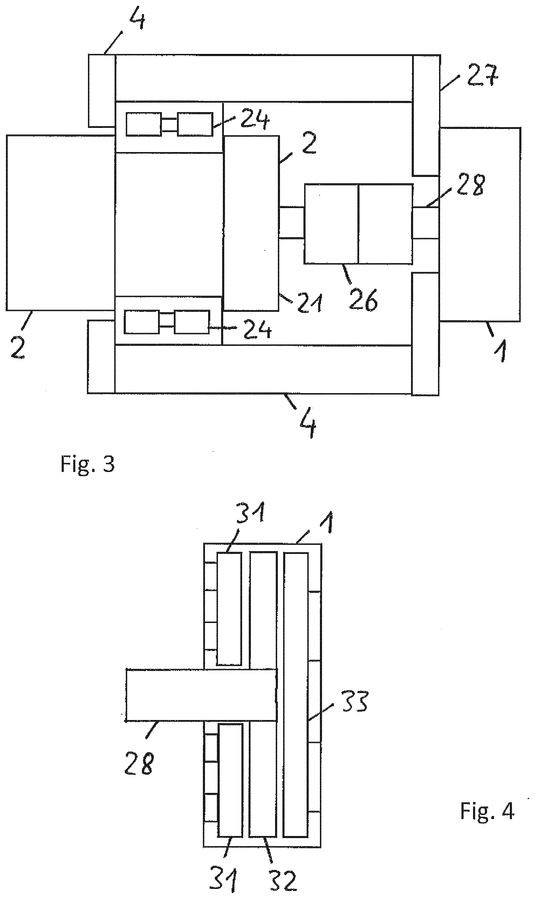

Fig. 3 zeigt ein Ausführungsbeispiel für die Ankopplung eines Ferraris-Sensors 1 an eine Radsatzwelle 2, welche von einem Wälzlager 24 in ihrem Endbereich drehgelagert ist. Das Ende der Radsatzwelle 2 ist mit dem Bezugszeichen 21 bezeichnet. Im linken Teil der Fig. 3 ist die Radsatzwelle 2 abgeschnitten dargestellt. Insbesondere würde im weiteren Verlauf der Anordnung in Fig. 3 nach links ein auf der Radsatzwelle 2 angeordnetes Rad folgen.

Mit dem Ende 21 der Radsatzwelle 2 ist eine mit der Welle mitdrehende Kupplung 26 verbunden, bei der es sich z.B. eine torsionssteife Kupplung handeln kann, die auch in axialer Richtung der Drehachse lediglich einen geringen axialen Versatz während des Betriebes zulässt. Ein solcher geringer axialer Versatz ist erforderlich, um die Funktion des Ferraris-Sensors nicht zu beeinträchtigen. Der Ferraris-Sensor 1 ist über ein Verbindungsstück 28 mit der Kupplung 26 verbunden.

Ein Ausführungsbeispiel des Verbindungsstücks 28 mit dem daran angekoppelten Ferraris-Sensor 1 ist in Fig. 4 dargestellt. Das drehbare Teil 32 des Sensors 1 ist drehfest mit dem Verbindungsstück 28 verbunden, sodass das drehbare Teil 32 mit der Radsatzwelle und der Kupplung 26 mitdreht. Dagegen ist ein nicht drehender Teil 33, der mit einem Gehäuse des Sensors 1 verbunden sein kann, insbesondere über das Gehäuse mit einem Lagergehäuse 4 des Radsatzlagers 24 verbunden. Außerdem ist eine Magnetfeld-Erzeugungseinrichtung 31 (z.B. eine Anordnung von Permanentmagneten oder ein Permanentmagnet) ebenfalls fest mit dem Gehäuse des Sensors 1 verbunden.

Während des Betriebes des Sensors 1 wird das drehbare Teil 32 um die Drehachse der Radsatzwelle gedreht. Dabei induziert das von der Magnetfeld-Erzeugungseinrichtung 31 erzeugte Magnetfeld elektrische Wirbelströme in dem drehbaren Teil 32. Diese Wirbelströme 32 wiederum erzeugen ein zusätzliches Magnetfeld, welches in der mit dem nicht drehenden Teil 33 verbundenen Messeinrichtung eine elektrische Spannung induziert, die als primäres Messsignal dient und insbesondere bei örtlich homogenem Magnetfeld der Magnetfeld-Erzeugungseinrichtung 31 allein von der Drehbeschleunigung abhängt. Wegen des homogenen Magnetfeldes erzeugt das Magnetfeld lediglich bei Änderung der Drehgeschwindigkeit und somit bei einer Drehbeschleunigung elektrische Ströme in dem drehbaren Teil 32, die in der Messeinrichtung eine Spannung induzieren können.

## Patentansprüche

1. Verfahren zum Erkennen von Drehbeschleunigungen an Radsätzen (2, 3) eines Schienenfahrzeugs, wobei
- von einem Drehbewegungs-Sensor (1) Messwerte der Drehbewegung des Radsatzes (2, 3) und/oder der Drehbewegung eines mit dem Radsatz (2, 3) gekoppelten Antriebsstranges (6, 7) gemessen werden,
- aus den Messwerten erkannt wird, dass eine Drehbeschleunigung vorliegt, und/oder die Messwerte als Eingangsgröße für eine Steuerung eines Antriebsmotors (6) des Schienenfahrzeugs verwendet werden, um eine Drehbeschleunigung zu reduzieren und/oder zu vermeiden, und
**dadurch gekennzeichnet, dass**
- der Drehbewegungs-Sensor (1) die Messwerte gewinnt, indem durch ein Magnetfeld elektrische Ströme in einem mit dem Radsatz (2, 3) oder dem Antriebsstrang (6, 7) drehenden Teil (32) des Sensors (1) induziert werden, die induzierten elektrischen Ströme ein zusätzliches Magnetfeld erzeugen und abhängig von dem zusätzlichen Magnetfeld eine elektrische Spannung in einem nicht drehenden Teil (33) des Sensors (1) induzieren, aus der die Drehbewegungs-Messwerte ermittelt werden.

2. Verfahren nach Anspruch 1, wobei der Sensor (1) unmittelbar die Drehbeschleunigung des drehenden Teils (32) des Sensors (1) misst.

3. Verfahren nach Anspruch 1 oder 2, wobei die elektrischen Ströme in dem drehenden Teil (32) des Sensors (1) induziert werden, während das drehende Teil (32) mit dem Radsatz (2, 3) verbunden ist.

4. Verfahren nach Anspruch 3, wobei eine Magnetfeld-Erzeugungseinrichtung (31) die elektrischen Ströme in dem drehenden Teil (32) des Sensors (1) induziert und die elektrische Spannung in dem nicht drehenden Teil (33) des Sensors (1) induziert wird, während die Magnetfeld-Erzeugungseinrichtung (31) und das nicht drehende Teil (33) mit einem Gehäuse (4) eines Radsatz-Drehlagers (24) verbunden sind, das den Radsatz (2, 3) während seiner Drehbewegung lagert.

5. Anordnung zum Erkennen von Drehbeschleunigungen an Radsätzen (2, 3) eines Schienenfahrzeugs, wobei:
- die Anordnung einen Drehbewegungs-Sensor (1) aufweist, der ausgestaltet ist, Messwerte der Drehbewegung des Radsatzes (2, 3) und/oder der Drehbewegung eines mit dem Radsatz (2, 3) gekoppelten Antriebsstranges (6, 7) zu messen,
- die Anordnung eine Auswertungseinrichtung (13) aufweist, die mit einem Signalausgang des Drehbewegungs-Sensors (1) verbunden ist und die ausgestaltet ist, aus den Messwerten zu erkennen, dass eine Drehbeschleunigung vorliegt, und/oder die ausgestaltet ist, Messwerte als Eingangsgröße für eine Steuerung eines Antriebsmotors des Schienenfahrzeugs zu verwenden, um eine Drehbeschleunigung zu reduzieren und/oder zu vermeiden, und
**dadurch gekennzeichnet, dass**
- der Drehbewegungs-Sensor (1) eine Magnetfeld-Erzeugungseinrichtung (31), ein während des Betriebes mit dem Radsatz (2, 3) oder dem Antriebsstrang (6, 7) drehendes Teil (32) und ein nicht drehendes Teil (33) aufweist, wobei die Magnetfeld-Erzeugungseinrichtung (31) während des Betriebes des Sensors (1) elektrische Ströme in dem drehenden Teil (32) induziert, die induzierten elektrischen Ströme ein zusätzliches Magnetfeld erzeugen und abhängig von dem zusätzlichen Magnetfeld eine elektrische Spannung in dem nicht drehenden Teil (33) des Sensors (1) induziert wird.

6. Anordnung nach Anspruch 5, wobei der Sensor (1) ausgestaltet ist, unmittelbar die Drehbeschleunigung des drehenden Teils (32) des Sensors (1) zu messen.

7. Anordnung nach Anspruch 5 oder 6, wobei das drehende Teil (32) des Sensors (1) mit dem Radsatz (2, 3) verbunden ist.

8. Anordnung nach Anspruch 7, wobei die Magnetfeld-Erzeugungseinrichtung (31) und das nicht drehende Teil (33) des Sensors (1) mit einem Gehäuse (4) eines Radsatz-Drehlagers (24) verbunden sind, das den Radsatz (2, 3) während seiner Drehbewegung lagert.

9. Anordnung nach Anspruch 7 oder 8, wobei das nicht drehende Teil (33) des Sensors (1) aus Sicht eines Rades (3a) eines Radsatzes (2, 3), der zwei Räder (3a, 3b) und eine die Räder (3) verbindende Radsatzwelle (2) aufweist, jenseits des anderen Rades (3b) des Radsatzes (2, 3) mit dem anderen Rad (3b) oder der Radsatzwelle (2) verbunden ist.

10. Anordnung nach Anspruch 5 oder 6, wobei das drehende Teil des Sensors mit einer Fahrmotorwelle eines Fahrmotors und das nicht drehende Teil mit einem Gehäuse des Fahrmotors verbunden ist.

11. Anordnung nach Anspruch 5 oder 6, wobei das drehende Teil des Sensors mit einer Getriebewelle eines Getriebes im Antriebsstrang des Schienenfahrzeugs und das nicht drehende Teil mit einem Gehäuse des Getriebes verbunden ist.

## Claims

1. A method for detecting angular accelerations on wheelsets (2, 3) of a rail vehicle, wherein
- measurement values of the rotational movement of the wheelset (2, 3) and/or of the rotational movement of a drive train (6, 7), which is coupled to the wheelset (2, 3), are measured by a rotational movement sensor (1),
- on the basis of the measurement values, it is identified that an angular acceleration is present, and/or the measurement values are used as an input variable for control of a drive motor (6) of the rail vehicle in order to reduce and/or avoid an angular acceleration, and
**characterised in that**
- the rotational movement sensor (1) obtains the measurement values as a result of electric currents being induced by a magnetic field in a part (32) of the sensor (1) which rotates with the wheelset (2, 3) or with the drive train (6, 7), the induced electric currents generate an additional magnetic field and, on the basis of the additional magnetic field, induce an electric voltage in a non-rotating part (33) of the sensor (1), from which the rotational movement measurement values are determined.

2. The method according to claim 1, wherein the sensor (1) directly measures the rotational acceleration of the rotating part (32) of the sensor (1).

3. The method according to claim 1 or 2, wherein the electrical currents are induced in the rotating part (32) of the sensor (1), while the rotating part (32) is connected to the wheelset (2, 3).

4. The method according to claim 3, wherein a magnetic field generation device (31) induces the electric currents in the rotating part (32) of the sensor (1) and the electric voltage is induced in the non-rotating part (33) of the sensor (1) whilst the magnetic field generation device (31) and the non-rotating part (33) are connected to a housing (4) of a wheelset rotary bearing (24), which supports the wheelset (2, 3) during its rotational movement.

5. An assembly for identifying rotational accelerations on wheelsets (2, 3) of a rail vehicle, wherein:
- the assembly comprises a rotational movement sensor (1), which is designed to measure measurement values of the rotational movement of the wheelset (2, 3) and/or the rotational movement of a drive train (6, 7) coupled to the wheelset (2, 3),
- the assembly comprises an analysis device (13), which is connected to a signal output of the rotational movement sensor (1) and which is designed to identify that a rotational acceleration is present on the basis of the measurement values, and/or which is designed to use measurement values as input variable for a controller of a drive motor of the rail vehicle in order to reduce and/or to avoid a rotational acceleration, and
**characterised in that**
- the rotational movement sensor (1) comprises a magnetic field generation device (31), a part (32) that rotates with the wheelset (2, 3) or with the drive train (6, 7) during operation, and a non-rotating part (33), wherein the magnetic field generation device (31) induces electric currents in the rotating part (32) during the operation of the sensor (1), the induced electric currents generate an additional magnetic field, and an electric voltage is induced in the non-rotating part (33) of the sensor (1) depending on the additional magnetic field.

6. The assembly according to claim 5, wherein the sensor (1) is designed to measure the rotational acceleration of the rotating part (32) of the sensor (1) directly.

7. The assembly according to claim 5 or 6, wherein the rotating part (32) of the sensor (1) is connected to the wheelset (2, 3).

8. The assembly according to claim 7, wherein the magnetic field generation device (31) and the non-rotating part (33) of the sensor (1) are connected to a housing (4) of a wheelset rotary bearing (24), which supports the wheelset (2, 3) during its rotational movement.

9. The assembly according to claim 7 or 8, wherein the non-rotating part (33) of the sensor (1), as seen from a wheel (3a) of a wheelset (2, 3) which has two wheels (3a, 3b) and a wheelset shaft (2) connecting the wheels (3), is connected on the other side of the other wheel (3b) of the wheelset (2, 3) to the other wheel (3b) or to the wheelset shaft (2).

10. The assembly according to claim 5 or 6, wherein the rotating part of the sensor is connected to a drive motor shaft of a drive motor and the non-rotating part is connected to a housing of the drive motor.

11. The assembly according to claim 5 or 6, wherein the rotating part of the sensor is connected to a transmission shaft of a transmission in the drive train of the rail vehicle and the non-rotating part is connected to a housing of the transmission.

## Revendications

1. Procédé d'identification d'accélérations de rotation au niveau d'essieux (2, 3) d'un véhicule sur rails, dans lequel
- des valeurs de mesure du mouvement de rotation de l'essieu (2, 3) et/ou du mouvement de rotation d'une chaîne cinématique (6, 7) couplée à l'essieu (2, 3) sont mesurées par un capteur de mouvement de rotation (1),
- il est identifié à partir des valeurs de mesure qu'une accélération de rotation est de mise, et/ou que les valeurs de mesure sont utilisées en tant que grandeur d'entrée pour une commande d'un moteur d'entraînement (6) du véhicule sur rails pour réduire et/ou éviter une accélération de rotation, et
**caractérisé en ce que**
- le capteur de mouvement de rotation (1) obtient les valeurs de mesure **en ce que** des courants électriques sont induits par un champ magnétique dans une partie (32), qui tourne avec l'essieu (2, 3) ou la chaîne cinématique (6, 7), du capteur (1), les courants électriques induits génèrent un champ magnétique supplémentaire et induisent, en fonction du champ magnétique supplémentaire, une tension électrique dans une partie (33) qui ne tourne pas du capteur (1), à partir de laquelle les valeurs de mesure de mouvement de rotation sont déterminées.

2. Procédé selon la revendication 1, dans lequel le capteur (1) mesure directement l'accélération de rotation de la partie (32) qui tourne du capteur (1).

3. Procédé selon la revendication 1 ou 2, dans lequel les courants électriques sont induits dans la partie (32) qui tourne du capteur (1) alors que la partie (32) qui tourne est reliée à l'essieu (2, 3).

4. Procédé selon la revendication 3, dans lequel un dispositif de génération de champ magnétique (31) induit les courants électriques dans la partie (32) qui tourne du capteur (1) et la tension électrique est induite dans la partie (33) qui ne tourne pas du capteur (1) alors que le dispositif de génération de champ magnétique (31) et la partie (33) qui ne tourne pas sont reliés à un carter (4) d'un palier rotatif d'essieu (24) qui supporte l'essieu (2, 3) pendant son mouvement de rotation.

5. Ensemble d'identification d'accélérations de rotation au niveau d'essieux (2, 3) d'un véhicule sur rails, dans lequel :
- l'ensemble présente un capteur de mouvement de rotation (1), qui est configuré pour mesurer des valeurs de mesure du mouvement de rotation de l'essieu (2, 3) et/ou du mouvement de rotation d'une chaîne cinématique (6, 7) couplée à l'essieu (2, 3),
- l'ensemble présente un dispositif d'évaluation (13), qui est relié à une sortie de signal du capteur de mouvement de rotation (1) et qui est configuré pour identifier à partir des valeurs de mesure qu'une accélération de rotation est en cours et/ou qui est configuré pour utiliser des valeurs de mesure en tant que grandeur d'entrée pour une commande d'un moteur d'entraînement du véhicule sur rails pour réduire et/ou éviter une accélération de rotation, et
**caractérisé en ce que**
- le capteur de mouvement de rotation (1) présente un dispositif de génération de champ magnétique (31), une partie (32) qui tourne pendant le fonctionnement avec l'essieu (2, 3) ou la chaîne cinématique (6, 7) et une partie (33) qui ne tourne pas, dans lequel le dispositif de génération de champ magnétique (31) induit pendant le fonctionnement du capteur (1) des courants électriques dans la partie (32) qui tourne, les courants électriques induits génèrent un champ magnétique supplémentaire et, en fonction du champ magnétique supplémentaire, une tension électrique est induite dans la partie (33) qui ne tourne pas du capteur (1).

6. Ensemble selon la revendication 5, dans lequel le capteur (1) est configuré pour mesurer directement l'accélération de rotation de la partie (32) qui tourne du capteur (1).

7. Ensemble selon la revendication 5 ou 6, dans lequel la partie (32) qui tourne du capteur (1) est reliée à l'essieu (2, 3).

8. Ensemble selon la revendication 7, dans lequel le dispositif de génération de champ magnétique (31) et la partie (33) qui ne tourne pas du capteur (1) sont reliés à un carter (4) d'un palier rotatif d'essieu (24), qui supporte l'essieu (2, 3) pendant son mouvement de rotation.

9. Ensemble selon la revendication 7 ou 8, dans lequel la partie (33) qui ne tourne pas du capteur (1) est reliée, vue depuis une roue (3a) d'un essieu (2, 3), qui présente deux roues (3a, 3b) et un arbre d'essieu (2) reliant les roues (3), au-delà de l'autre roue (3b) de l'essieu (2, 3), à l'autre roue (3b) ou à l'arbre d'essieu (2).

10. Ensemble selon la revendication 5 ou 6, dans lequel la partie qui tourne du capteur est reliée à un arbre de moteur de traction d'un moteur de traction et la partie qui ne tourne pas est reliée à un carter du moteur de traction.

11. Ensemble selon la revendication 5 ou 6, dans lequel la partie qui tourne du capteur est reliée à un arbre de transmission d'une transmission dans la chaîne cinématique du véhicule sur rails et la partie qui ne tourne pas est reliée à un carter de la transmission.
